# EUROPEAN PATENT APPLICATION

(11) **EP 4 136 978 A1**
(43) Date of publication of application: **22.02.2023**
(21) Application number: 21744851.3
(22) Date of filing: 21.01.2021
(51) Int. Cl.: A23B 4/044, A23L 3/10, A23L 3/16

(54) **SMOKER DEVICE FOR THE PREPARATION OF FOODSTUFFS OR BEVERAGES**

(30) Priority: 23.01.2020 ES 202030121 U
(71) Applicant: Singla Coma, Pedro, 08100 Mollet del Vallès (ES); Singla Salvador, Albert, 08002 Barcelona (ES); Vidal Hausmann, Jorge, 08021 Barcelona (ES); Pla Cortes, Hug, 08003 Barcelona (ES)
(72) Inventor: PLA CORTES, Hug, 08003 Barcelona (ES)
(74) Representative: Marti Castells, Xavier
(86) International application number: PCT/ES2021/070038
(87) International publication number: WO 2021/148699

(57) **Abstract**

A smoker device for the preparation of foodstuffs or beverages, comprising a tubular main body with a frontal opening communicating with an internal combustion chamber wherein combustible, aromatic material is disposed before a grille or filter, and with a smoke outlet on the opposite side of said tubular body communicating, via an orifice foreseen for this purpose, with a hood suited to cover a container with the foodstuffs or beverages, there also being a flame generator directed through the frontal opening to burn the combustible material, generating a flow of smoke into the hood. The smoke outlet is constituted by multiple outlets, and next to the grille or filter an impurity collector is located, closing the extremity of the tubular main body.

## Description

### DESCRIPTIVE MEMORY

### FIELD OF APPLICATION OF THE INVENTION

The field of application of the present invention is framed within the sector of the industry dedicated to the manufacture of kitchen utensils, appliances and devices, cocktails, catering and industrial preparation of food or beverages, focusing particularly on the field of those intended for smoking food or drink

### BACKGROUND OF THE INVENTION

From the Utility Model ES1184909U, whose owner is the applicant of the present invention, a smoker of the type is known that comprises a main body with a combustion chamber to receive flavoring combustible material, which is provided with a front opening for filling. and is delimited at its rear by a grid to hold said material but allowing the passage of smoke, which also comprises a smoke outlet arranged after the combustion chamber in the main body, a propelled flame generator intended to introduce the it calls through the front opening, and a bell, formally and dimensionally suitable to cover a receptacle containing the food or beverages to be smoked, said bell being provided with, at least, one orifice for introducing the smoke outlet.

Said smoker, although it satisfactorily fulfills the purpose for which it is intended assuming an improvement over other previously known systems for the same purpose, still has certain aspects that can be improved.

In particular, an aspect to be improved is given by the fact that the smoke outlet is directly oriented and open towards the food or beverages that are under the hood, lid or cover and, therefore, any carbon residue from the combustion that passes through the grate or filter falls on them, which is undesirable since, in addition to having a bad taste, it can even be unhealthy.

Another aspect to be improved is the difficulty of removing the grill or filter in order to clean and / or replace it, and that with the current structural configuration of the smoker it is a complicated operation that must be carried out cold.

The objective of the present invention is, therefore, to provide the market with a new smoker that is improved in the aforementioned aspects as well as in other additional aspects to provide it with greater efficiency and practicality of use.

Likewise, another objective of the present invention is to provide a smoker modified to allow the advantages of its use in the production of food and beverages on a larger scale, both at an artisanal and industrial level, for example for the production of beverages such as wines, beers or liquors, or foods such as cereals, oils, butters, cheeses, nougats or chocolates with smoked aromas.

On the other hand, and as a reference to the current state of the art, it should be noted that, at least by the applicant, the existence of any other device that presents technical and structural characteristics equal or similar to those presented here is unknown, is claimed.

### EXPLANATION OF THE INVENTION

The smoker device for the preparation of food or beverages that the invention proposes is configured as the ideal solution to the aforementioned objective, the characterizing details that make it possible and distinguish it conveniently included in the final claims that accompany this description.

Specifically, what the invention proposes, as noted above, is a smoker device for the preparation of foods or beverages flavored with smoke of the type that comprises a tubular main body with a front opening that communicates with an internal combustion chamber in the that a grid or filter is arranged to receive and retain the combustible and aromatizing material to be burned and generate the smoke that will provide, but not limited to, aromas, tastes or flavors, nutritional or medicinal properties ... (combustible materials and / or flavorings that include: spices, arils, seeds, fruits or nuts, dried flowers or flowers, mushrooms or fungi such as truffles, vegetable rinds, roots, resins, rhizomes, herbs especially aromatic ones, curry-style condiments, plants especially medicinals, teas or coffees, dried vegetables, wood or its derivatives such as sawdust or shavings ...); and a smoke outlet at the opposite end of said body that, through an orifice provided for this purpose, communicates with a bell, lid or cover suitable for covering a container with food or beverages to be smoked, also providing a flame generator, ideally constituted by a torch, to propel the flame through the front opening to burn the combustible material and scent.

According to the present invention, the device is essentially distinguished in the following:
- On the one hand, by the fact that the aforementioned tubular main body, instead of a single smoke outlet oriented horizontally and, therefore, directing the flow of smoke directly onto the food or beverages, comprises one or more outlets of smoke oriented so that they do not direct the flow of smoke directly towards the food located underneath, but rather towards the walls of the hood, lid or cover, for which they are preferably arranged vertically, thus wrapping the food or beverages placed on it. the container that covers said hood, lid or cover; Y
- on the other hand, due to the fact that, after the grid or filter in which the fuel and flavoring material is incorporated and prior to the described vertical smoke outlet or outlets, it also comprises a deposit of impurities, ideally attachable or unscrewable to facilitate its opening and cleaning, where the impurities generated by the burning of said material are collected and which, due to their size, can pass through the grid or filter, preventing them from falling onto food or beverages.

Likewise, the smoker device is eventually also distinguished by additionally comprising a hatch in the tubular body to place and remove the grid or filter from inside it quickly and simply, facilitating its cleaning and / or replacement, even without having to remove the hood tube, lid or cover, since it allows access from the side of the tubular body .

In this way, the smoke generated is introduced into the hood, lid or cover, which when covering the container (plate, platter, casserole, glass, glass, grill, paella, rotisserie, griddle, etc.) that contains the food or Beverages prevents the dispersion of smoke and allows smoking to be carried out quickly, with very little smoke, or even without smoke, making use of a dryer or similar heat source, sometimes, although not necessarily, with a slower combustion; to extract the essence of the product and flavor or season with a flameless flavor, and without the risk of combustion residues falling on food or beverages. In addition, when removing the main body (smoker) leaving the hood, lid or cover, on the receptacle (for food or drinks) the effect is still preserved, by temporarily maintaining the flow of smoke spilling, and exiting through the opening as if it were It will be about a volcano that is giving off smoke while the food is served. This effect is important, because in restaurants, clubs and other public places, more and more importance, together with the quality of the food and drinks served, is given more and more importance to the staging or attention-calling show effect).

Thus, when removing the tubular main body leaving the hood, lid or cover, on the receptacle where the food or beverages are, the smoke is kept until deciding to release it in various ways:
- with the aforementioned effect of a volcano that is releasing smoke through the upper hole of the hood, lid or cover, while going towards the
   SUBSTITUTE SHEET (RULE 26)table, or while the food is being served (when it comes off through a limited hole, the duration is prolonged in time);
- or when uncovering the hood, lid or cover, already in front of the diners, looking for a "Wow" or impact effect.

The main advantages would be, among others: to capture the attention of the public, entertain and arouse curiosity; generate an effect of desire and desire to participate; have an additional element in celebrations to introduce something or mark a high point, for example weddings, birthdays, anniversaries ...; "performance" effect and advertising claim, facing the premises, diners, and possible sponsoring companies; and also, savings in kitchen equipment and culinary facilities, such as wood-burning ovens, Jasper ovens and the like, barbecues and fireplaces; together of course the energy saving of firewood, electricity and charcoal, while maintaining the same effect in the mouth, the taste, the aroma ...

On the other hand, the flame, which is preferably propelled by the flame generator, enters through the front opening of the combustion chamber and drives the flow of combustion smoke towards the vertical smoke outlets provided at its opposite end, collecting any impurity that can drag said smoke into the tank provided for this purpose, allowing smoking to be carried out in a very fast, hygienic and ecological way.

It should be noted that, although to cause the flow of smoke into the hood, lid or cover, the device preferably has a propelled flame generator (ideally consisting of a torch); instead of this, you can optionally have a fan interior, ideally powered by electricity or batteries, to help shift the flow of smoke to the interior walls of the hood, lid or cover.

Alternatively, the fuel and flavoring material (which facilitates smoked flavors) can be in the form of a capsule of pressed fuel, thus making it easier to use and giving the possibility of creating a range of aromas and / or flavors.

For example, by way of example, but not exhaustive, the combustible and flavoring material contributes: tastes or flavors; standardized or personalized to the taste of the chef / bartender or the consumer, independently of or as a complement to the aromas; These include: spices, arils, seeds, fruits or nuts, dried flowers or flowers, mushrooms or fungi such as truffles, vegetable rinds, roots, resins, rhizomes, herbs especially aromatic ones, curry-style condiments, plants especially medicinals, teas or coffees, dried vegetables, wood or its derivatives such as sawdust or shavings ...).

And, if it consists of a capsule, ideally, it has the shape of a thick medallion, that is, a circular base with a slight height, like the section of a cylinder, with several purposes, among others: to visually attract the user by its professional and attractive design; but more importantly, to facilitate smoker handling and speed up loading, which provides a competitive advantage and an improvement in efficiency compared to other smokers, where the load is dispersed and therefore requires additional time (time is scarce in professional cuisine, because it seeks to satisfy the attending clientele in short time slots and with a large concentration of public). Thus, it allows you to save time; reduce stress from personal, (especially in kitchen); facilitates cleaning and does not generate waste.

In any case, the fuel and flavoring material, when it is a capsule, can be made of an enveloping organic component that contains other elements crumbled into particles such as pellets, grains, powder or the like, or of an enveloping organic component that contains other elements. in a liquid, resinous, vaporous, cream or frozen state, or, as indicated above, it can also be made up of salts, spices, arils, seeds, flowers, dried flowers, roots, rhizomes, wood, fruits, nuts, dried rinds, vegetable rinds, dried and powdered vegetables, condiments (such as curry, Provencal herbs, ras el hanout, among others), plants, (with special emphasis on medicinal ones), resins, and oils,, (especially in essential oils), with all of which can provide nutritional and / or medicinal properties.

In one embodiment, the tubular body of the device is incorporated into the hood, lid or cover, in a vertical position through a hole made in the upper part thereof, in which case, the front opening is located at the top, preferably in an elbowed section of the tube, and the preferably vertical smoke outlets are preferably constituted by a plurality of grooves, but without ruling out other shapes and arrangements, made in a section of the wall on the opposite side of the tube, located below and that It is housed inside the hood, lid or cover, under which an impurity collection tank is incorporated that closes the lower end of the tube, so that any impurity that drags the flow of smoke, before exiting falls by gravity into said Deposit.

In a variant embodiment, the tubular body is incorporated into the hood, lid or cover, in a horizontal position through a hole made on one side thereof, in which case, the front opening is located laterally at the front end of the external section of the tube (which may or may not be bent to facilitate the introduction of the combustion and smoky flavor tablet or capsule), incorporating the grid or filter in the vicinity of the opposite end, within the internal section of the tube and in an inclined position, in such a way that the material or fuel and flavoring capsule to be burned is supported on it and the lower section of tube that remains under it acts as a deposit for collecting impurities, the smoke outlets being, preferably vertical, defined by a plurality of perforations made in the base that closes said rear end of the tube.

In either embodiment, the tubular body of the device is removable from the hole in the hood, lid or cover, in which it is incorporated. In addition, optionally, the tubular body has a stop so that it does not slide inside the hood, lid or cover, as well as a handle to hold it without burning yourself. For its part, said handle, optionally, provides a prominent space to include advertising claims or brand presence, (by way of example of the restaurant or a sponsor).

In another embodiment, the smoker device, mainly applicable for the preparation of beverages in the field of cocktails or mixology, liqueurs, beers, infusions, teas or coffees, when it is desired to increase the production capacity of said cocktails or beverages, can include, as the smoke outlet of the tubular main body, one or multiple connectable outlets, made up of perforations with a connection, preferably circular, located on its perimeter, at the height of the interior combustion chamber, to which one or more directional ducts are attached, preferably consisting of flexible tubes of rubber or food grade silicone, which allow directing the flow of smoke simultaneously inside one or several bells, lids or covers that cover corresponding containers with food or beverages, without directly incorporating the tubular smoker body to them, and so that they can be placed separately from it, connecting the distal end of said directional tubes through of the hole made in the hood, lid or cover.

Preferably, in this case, it may be a small hole specially made for this purpose, having contemplated in said holes, small or not, the existence of self-closing means, such as a plug or anti-leak valve, silicone or similar auto - closure or self-sealing, in the style of a one-way flow control valve in the food industry, with the appropriate diameter to assemble one of the aforementioned tubes, at the end of which they will be conveniently equipped with a connector or coupling nozzle.

In this way, when removing the mouthpiece and the tube, the corresponding silicone anti-leak valve self-closes to prevent the exit of the existing smoke inside the hood, lid or cover.

For this, the device contemplates an accessory that can be coupled to the tubular main body, specifically to the rear section thereof, which incorporates the described connectable outlets and which adjusts covering the smoke outlets thereof to be able to fit the aforementioned flexible directional ducts.

Furthermore, in this embodiment, the device can have a base, autonomous and independent of the hood, lid or cover, with which it obtains stability to be supported by its own weight. And, alternatively, it can have fastening or coupling elements to tables, bars, platforms and other surfaces.

In any case, the device can be completely "customizable", as a mechano, piece by piece or by blocks, adaptable to the needs or tastes of each of the users.

In this sense, it should be noted that the hood, lid or cover has different shapes and materials depending on the different applications to which the device is intended and both can be a specific element of the device itself for exclusive use with it, for example in its shape as a hood, or an element that already exists and can be used for other uses, for example in its shape as a lid for a kitchen container or similar.

In any case, the advantages provided by the use of the hood, lid or cover to keep the container covered after using the smoking device of the invention are several:
- The container (plate, source, paella pan or similar), arrives at the table with the hot food.
- The container (plate, source, paella pan or similar), does not get dirty or take on another smell.
- Keeps the smoke and the smell or aroma.
- The hole into which the main body of the smoker is inserted is covered with a stopper, preferably a cork stopper, to graduate the smoke.
- The use of this hood is especially appropriate to combine with foods prepared on the grill, grill, plate, barbecue, without smoke, because the smoking is instantaneous and is sealed with smoke control.

The aforementioned use of the cork stopper to cover the hole in the bell is especially appropriate because the cork takes on an odor and there is a ceremony of "uncorking" the food plate, like that of a good wine. This aspect adds another ceremonial element, such as a ritual that is related to the world of great wines, and that can incorporate a visual element of branding or advertising, since it allows to engrave names, emblems, slogans ... on the stopper.. It can also be a souvenir item, as diners can keep it.

In any case, the hood, lid or cover may have different shapes, to adapt to the dishes, dishes, paella pans or similar that are used in each case, and be made of different types of materials suitable for food and drink. In addition, it may also be equipped with fastening hooks to the food or beverage container, for example, to fix it to a paella pan, so that they hold the hood, lid or cover to the paella pan in a way that is easy to uncover when It is convenient but it does not let the smoke escape before it is uncovered.

The hole in the hood, lid or cover intended for the insertion of the main body of the smoker, to prevent the smoke from escaping through it when said body is removed (thus allowing its reuse in the kitchen), as already indicated, It is covered with a stopper, preferably made of cork, although, alternatively, it can have a closing hatch that slides horizontally as if it were a door peephole or a hatch; or a clasp or clamp with a wire flange or similar (such as on a kitchen pot).

Regarding the forms that the hood, lid or cover can take, depending on the type of food or drink and the type of container with which the smoker is used, preferably, they will be the following:
- Trunk. A model of bell, lid or cover consisting of a hollow frustoconical body, made up of a circular base, which defines the perimeter that it encompasses and therefore covers the container (plate, paella, grill, griddle, grill or similar utensil) where it will be placed. the food to be smoked, and a conical lateral surface being its upper vertex cut to define the upper hole of the hood, lid or cover, which allows the insertion of the main body of the smoker and the controlled exit of smoke when removing it, achieving the effect volcano, due to its similarity to the eruption of a real volcano.
- Tronpyramidal. A bell, lid or cover model consisting of a hollow polyhedral truncated pyramidal body, made up of a regular polygon at its base, which delimits the perimeter that encompasses and therefore covers the container (plate, paella, grill, plate, grill or similar utensil) where the food to be smoked will be placed, and a plurality of triangular lateral faces whose number coincides with the number of sides of the polygon that makes up the perimeter of the base, its upper vertex being cut to define the upper hole of the hood, lid or cover, which allows the insertion of the main body of the smoker and the controlled exit of smoke when removing it, making the effect of a volcano, due to its similarity to the eruption of a real volcano.

- In the form of a geodesic dome with a spherical base. Bell, lid or cover consisting of a body in the shape of a geodesic dome, where its faces can be triangles, hexagons or any other polygon. The vertices will [ideally] coincide on the surface of a sphere. The frequency of the geodesic dome, that is, the number of times that the edges of the icosahedron or dodecahedron are subdivided giving rise to smaller triangles will be adapted to the design and the surface of the utensil (paella pan, round grill, barbecue ...) a cover.
- In the form of a geodesic dome with an elliptical base. Bell, lid or cover, consisting of a geodesic dome-shaped body, where its faces can be triangles, hexagons or any other polygon. The vertices will [ideally] coincide on the surface of an ellipse. The frequency of the geodesic dome, that is, the number of times that the edges of the icosahedron or dodecahedron are subdivided, giving rise to smaller triangles, will be adapted to the design and surface of the utensil (ellipsoidal grill or similar, ellipsoidal grill, barbecue ... . ) To cover.
- In the form of a parallelogram. Hood, lid or cover, consisting of a hollow parallelepipedic body with rounded sides and a rectangular or square base with blunt corners, adapted to the design and surface of the receptacle (paella pan, grill, barbecue ...) to be covered.
- Flat. Lid or cover, consisting of a flat or semi-flat body, in a plantar shape adapted to the design and surface of the container (pot, dishes, salad bowls, drainers, containers, ...) to be covered.
- Other forms. The hood, lid or cover may have other geometric shapes to adapt to different sources or kitchen utensils that constitute the container for the food or beverages to be smoked, naming by way of non-exhaustive example: paella pans, barbecues, grills, grills, plates, iron-grills, plates, trays, salad bowls, platters, glasses, glasses, pots, pans, containers , refrigerators, thermal containers ...

In all cases, the main tubular body of the smoker will be applied, either directly in a large hole, with the suitable dimensions for its insertion, practiced for this purpose in the upper or lateral part of the body of the hood, lid or cover, or through a small hole, suitable for the insertion of the end of a flexible directional conduit (ideally made of food grade silicone, or similar) practiced in an appropriate point of the hood, lid or cover, with or without other accessories such as valves or gaskets. silicone.

In any case, in addition, the possibility is contemplated that the hood, lid or cover is an existing element (from manufacturers of kitchen utensils) to which a hole will have been made to apply the body of the smoker or a smaller hole to apply a smoke distribution duct with a nozzle and, optionally, interposing a self-closing valve.

Regarding the materials, the hood, lid or cover, ideally, is made, in whole or in part, in stainless steel for its properties: non-stick and because it does not affect the taste of food, to facilitate its continuous use, between changes. of dishes in the kitchen (stainless steel is not impregnated with odors or flavors; the anti-adherence quality facilitates its final cleaning at the end of the day and maintenance due to its resistance to stains; it has a long useful life, being kept in perfect condition; resistance to corrosion (facilitating its conservation and cleaning); resistance to high temperatures; prevents germs and bacteria, (due to its non-porous surface, unlike plastics, wood ...); provides modern and designer aesthetics.

However, the hood, lid or cover will be made, in whole or in part, in any other type of materials suitable for food, cooking and cocktails, by way of example not exhaustively: glass, crystal, ceramics, terracotta, polymers suitable for their use in kitchen and food (polyethylene, Teflon, Bakelite, silicone ...), iron, titanium, anodized aluminum, wood or others.

Continuing with the particularities of the device, it should be noted that, preferably, it can be fully adapted in its design to be integrated into furniture and kitchen elements and professional or group catering, but not limited to, barbecues, grill, grill, plates, griddle-grill, hot cabinets; cold and refrigeration cabinets; catering furniture, refrigerators, ovens and the like. The adaptation will be carried out, either by applying the tubular main body, directly on the element or by means of a flexible directional smoke feed duct, for example a catering cabinet; either on a hood, lid or cover made expressly or in standard formats to cover the element in question, for example a grill or a barbecue. The smoke generated is introduced into the hood, lid or cover, which, by covering the container (plate, platter, casserole, glass, glass, grill, paella, grill, etc.) that contains the food or beverages prevents its dispersion.

This has advantages at the gastronomic and nutritional level:
- smoke quickly;
- great taste with little amount of smoke;
- without the risk of combustion residues falling on food or drinks;
- maintaining and maximizing flavors;
- maintaining certain nutritional and / or medicinal aspects present in smoked products or food. But it also has a series of additional advantages, which are controllable since it allows to regulate the smoke and the intensity of the moment and staging.

Finally, the smoker device (1) for the preparation of food or beverages, according to the invention, in another embodiment, is designed with greater dimensions, in order to couple its hood, lid or cover to containers consisting of containers, with character artisanal or industrial, of any type and size, from barrels to silos, for example for the production of beverages such as wines, beers or spirits, or foods such as cereals, oils, butters, cheeses, nougats or chocolates. To do this, it will preferably have a propelled flame generator related to the size of said silos or containers, to introduce the flame through the previous opening, held by its appropriate coupling system, and burn the combustible and aromatic material, also in this case related to the size of said silos, generating a flow of smoke into the container, either container or silo, from the opening made in the upper part of it or one of its sides, depending on the particularities of each product, industry or production.

### DESCRIPTION OF THE DRAWINGS

To complement the description that is being made and in order to help a better understanding of the characteristics of the invention, the present specification is attached, as an integral part thereof, to a set of drawings in which, for illustrative purposes and non-limiting, the following has been represented:
Figure number 1.- Shows a schematic side perspective view of an example of embodiment of the smoker device for the preparation of food or beverages, object of the invention, showing the main parts and elements that it comprises, as well as the configuration and arrangement of the same, including some internals represented in broken lines, in a variant embodiment with an upper hole for inserting the tubular main body and a bell in the shape of a truncated pyramidal dome;
Figure number 2.- Shows a schematic view in lateral perspective of another vahant of the device, according to the invention, also appreciating the parts and elements that it comprises, in this case in a vahant with a lateral hole for inserting the main tubular body and bell conical dome-shaped;
Figure number 3.- Shows a schematic side perspective view of an example of the tubular main body of the device in an option that incorporates an additional body with multiple connectable outlets for directional tubes, represented in a phase prior to its coupling to said main body;
and Figure number 4.- Shows a schematic perspective view of the main body of the device with the additional body and directional tubes once coupled thereto, and with said tubes connected in turn to two containers with a spherical dome and a flat lid, respectively.

### PREFERRED EMBODIMENT OF THE INVENTION

In view of the aforementioned figures, and in accordance with the numbering adopted, it can be seen in them respective examples of non-limiting embodiment of the smoker device for the preparation of food or beverages of the invention, which comprises what is described in detail then.

Thus, as can be seen in said figures, the device (1) of the invention comprises, in a known manner, a tubular main body (2) with a front opening (3), which communicates with an interior combustion chamber (4) where fuel and flavoring material (5) is placed before a grid or filter (6), and with smoke outlet (7) on the opposite side of said tubular body (2) that communicates, through a hole (8) of coupling provided for this purpose, with a bell, lid or cover (9) suitable to cover a container (10) with food or beverages to be smoked, also having a flame generator (11), which is propelled by the opening front (3) to burn the combustible material and fragrance (5) generating a flow of smoke into the hood, lid or cover (9).

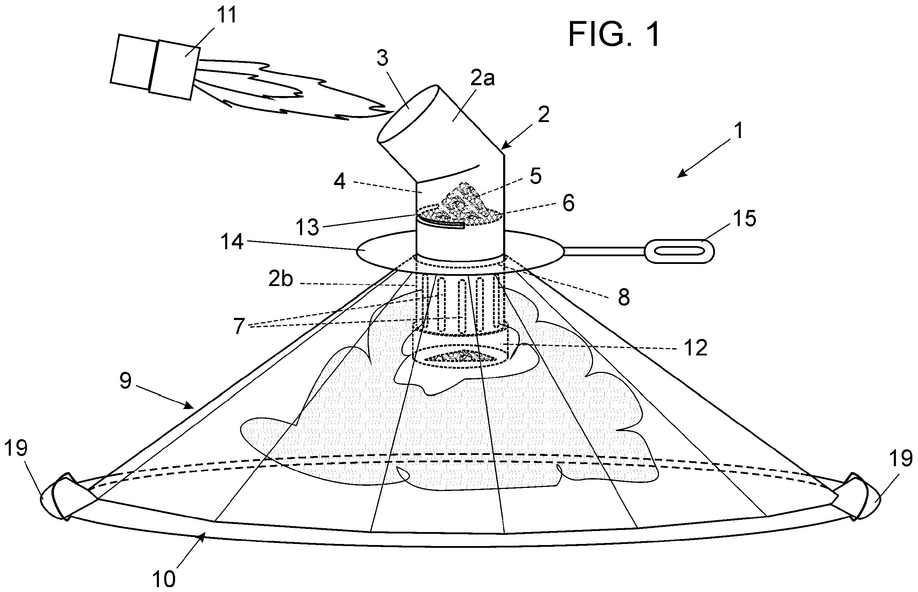

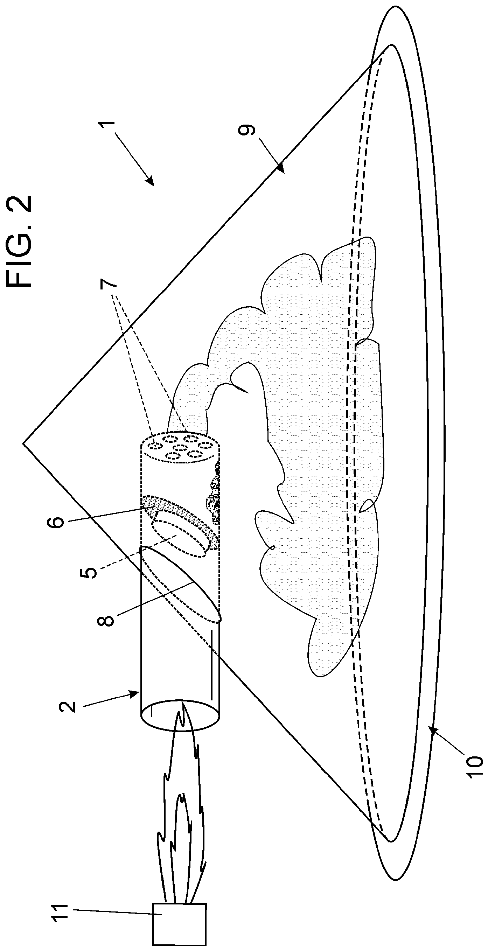

And, essentially, the device (1) is distinguished by comprising, as a smoke outlet (7) of said tubular main body (2), multiple smoke outlets (7), which, when said tubular body (2) It is used partially inserted in the hole (8) of the hood, lid or cover (9), being this dimensioned for it, as shown in the examples of figures 1 and 2, are oriented towards the interior walls of the hood, lid or cover, (9), for which, preferably, they are located in a vertical position, as well as an impurity collection tank (12), located behind the grid or filter (6), which, preferably, is removable in order to be able to clean it.

In addition, preferably, the tubular body (2) also comprises a hatch (13), which can be opened or with closing means to prevent the escape of smoke, arranged on the surface of said body and which gives access to the grid or filter (6) from the inside to be able to place and remove it easily even without removing the tubular body (2) from the hood, lid or cover (9).

It should be noted that, to cause the flow of smoke in the tubular main body (2) towards the interior of the hood, lid or cover (9), preferably, the flame generator (11) is a propelled flame generator, ideally consistent in a torch, as shown in Figures 1 and 2, although optionally it may comprise an indoor fan (not shown).

In figure 1 it is observed how, in one embodiment, the tubular body (2), which is arranged vertically by being incorporated into the hood, lid or cover, (9) through a hole (8) of a size adjusted to said tubular body (2) made superiorly therein, has the front opening (3) located superiorly, at the end of a first elbowed section (2a) of the tube, presenting multiple vertical smoke outlets (7) preferably constituted by a plurality of grooves made in a second section (2b) or lower section of the wall on the opposite side of the tube (2) that is housed inside the hood, lid or cover, (9), and presents the impurity collection tank (12) as a removable receptacle that closes the lower end of the tube (2).

In this execution, it can be seen how the device also has a stop (14) to hold the tubular body (2) that rests on the hole (8) of the hood, lid or cover, (9) as well as a handle (15 ) to grab and uncover, where appropriate without burning yourself.

In figure 2, a variant embodiment is represented, in which the tubular body (2) is incorporated into the hood, lid or cover (9) in a horizontal position through a hole (8) of a suitable size for it and made laterally therein, and has the front opening (3) located laterally at the front end of the external section of the tube (2).

The tubular body (2) tube can be straight or slightly bent; If it is straight, the introduction of the combustion and flavored material (5) is carried out laterally, with the possibility of using the torch or other instrument, and if it is angled, it is introduced through the opening semi-vertically at the corresponding angle, and the Gravity helps to seat it in position. The tubular body (2) can have different lengths so that the fuel and fragrance material (5) and the grid or filter (6) can be located outside the hood, lid or cover (9), speeding up their placement and removal. in possible spare parts.

Optionally, the tubular body (2) can be divided into separable and attachable sections, for example by threading, to place said elements with greater ease and precision, or, alternatively, be done through a hatch (13) conveniently provided with a hatch or similar so that it opens and closes at the height of the space where the fuel and flavoring material (5) and the grid or filter (6) are placed to facilitate its placement and cleaning, both its final cleaning and intermediate cleaning between uses with different foods, avoiding the mixture of flavors.

Preferably, in this variant the grid or filter (6) is incorporated in an inclined position, in the vicinity of the inner end of the tube (2), in such a way as to define a surface on which the fuel and flavoring material (5) is supported by burn, and presents the impurity collection tank (12) formed by the lower section of tube that remains under said slanted grid or filter (6), also presenting preferably vertical smoke outlets (7) preferably defined by a plurality of perforations made in the wall that closes said rear end of the tube (2).

Furthermore, in either of the two embodiments of the device of the invention, the tubular body (2) can incorporate the stop (14) so that it does not slide inside the hood, lid or cover (9) beyond what is foreseen and It is removable from the hole (8) of said hood, lid or cover (9) by means of a holding handle (15) for faster actions avoiding burns. Optionally, said handle (15) defines a surface capable of including advertising elements.

Preferably, the hole (8) of the hood, lid or cover (9), once the smoking device has been removed, can be covered with a sealing means (not represented in the figures), which, preferably, is a plug of materials that absorb odors, - cork style, although this is not a limitation, as it can also be metallic, ceramic, etc., as well as present different shapes, such as spherical, cork stopper style, cone inverted, flat layer, and even with the possibility of incorporating decorative or advertising elements. Alternatively, the sealing means of the hole (8) of the hood, lid or cover (9) can have a hatch, hatch style or the like, which slides blocking said hole (8) to prevent the exit of smoke when removing the body main tubular (2) of the smoker.

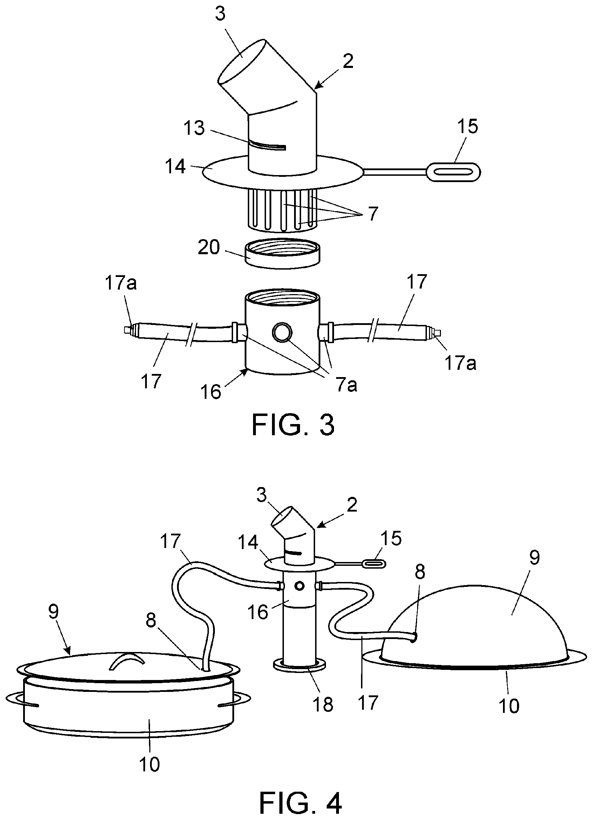

For its part, as can be seen in Figures 3 and 4, in another embodiment, the device (1) comprises, covering the smoke outlets (7) of the tubular main body (2), an additional body (16) with one or multiple connectable outlets (7a), located on its perimeter, to which one or more directional ducts (17) are attached, preferably consisting of flexible tubes of rubber or food-grade silicone, which allow directing the flow of smoke simultaneously into the interior of one or several bells, lids or covers (9) independently located to the tubular body (2) and to which they are coupled at their opposite end through a hole (8) made for this purpose therein.

Preferably, said orifice (8) is of a reduced size, according to the diameter of the directional conduits (17) or of the coupling nozzle that is preferably provided at the end thereof and in any case, also preferably, it has a self-closing valve.

As can be seen in the aforementioned figures 3 and 4, said additional body (16) is an accessory that can be attached to the rear end of the tubular body (2) which, for example by interposing an annular threaded piece (20), fits over the same covering the smoke outlets (7) applicable to introduce the smoke directly into the hood, lid or cover (9).

In addition, in this embodiment, the tubular main body (2) has a support base (18) that allows its autonomous and independent support from the hood, lid or cover (9), being able to have, alternatively, elements of fastening or coupling to tables, bars, platforms and other surfaces, although this has not been represented in the figures.

As can be seen in the different figures, the hood, lid or cover (9) has different shapes and is made of different materials, depending on the different applications for which the device (1) is intended, and it may be a specifically manufactured element, for use with the device (1) or an existing element, usable for other uses, for example in its form as a lid for a kitchen container, which has been adapted with the hole (8) to couple the tubular body ( 2) or the nozzle (17a) of a directional tube (17). Furthermore, in any case, the hood, lid or cover (9) can have fasteners (19) for coupling to the container (10), for example as shown in figure 1. More specifically, in said example such fasteners (19) are determined by respective extensions of the surface of the hood, lid or cover (9) suitable to be inserted under the handles of the container (10).

Thus, for example, and without this implying a limitation, the bell, lid or cover (9) can be frusto-conical, frustopyramidal, dome-shaped with a circular base, dome-shaped elliptical base, prismatic or Parallelepiped with a rectangular or square base, a flat circular or rectangular shape, or other shapes.

And, regarding the materials, the hood, lid or cover (9) can be made of stainless steel, glass, crystal, ceramic, terracotta, polymers suitable for use in cooking and food (polyethylene, teflon, bakelite, silicone ...), iron, titanium, anodized aluminum, wood or others.

Finally, it should be noted that, in a preferred embodiment, the fuel and flavoring material (5) can be a capsule of pressed material, preferably in the form of a tablet or disk, similar to a thick medallion.

In addition, optionally the combustible and flavoring material (5) can be made of an organic component with other elements crushed into particles, such as "pellets", grains, powder or similar, or with elements in a liquid, resinous, vaporous, creamy or frozen state. , or, it can be constituted by salts, spices, arils, seeds, flowers, dried flowers, roots, rhizomes, woods, fruits, nuts, dried bark, vegetable bark, dried or powdered vegetables, condiments, plants, in particular plants medicinal, resins, or oils, in particular essential oils, as well as by any possible combination of said elements.

Having sufficiently described the nature of the present invention, as well as the way of putting it into practice, it is not considered necessary to make its explanation more extensive so that any expert in the field understands its scope and the advantages derived from it.

## Claims

1. Smoker device for the preparation of food or beverages that, comprising a tubular main body (2) with a front opening (3), which communicates with an interior combustion chamber (4) where combustible material and flavoring material (5) are placed before a grill or filter (6), and with smoke outlet (7) on the opposite side of said tubular body (2), which, through a hole (8) provided for this purpose, communicates a hood, lid or cover (9) suitable for covering a container (10) with food or beverages, there is also a flame generator (11), which is propelled through the front opening (3) to burn the fuel and flavoring material (5) generating a flow of smoke into the hood, lid or cover (9), **characterized by** the fact of comprising, as a smoke outlet (7) of said tubular body (2), multiple smoke outlets (7), as well as a tank of collection of impurities (12), located behind the grid or filter (6).

2. .- Smoker device for the preparation of food or beverages, according to claim 1, **characterized in that** the impurity collection tank (12) is removable in order to clean it.

3. .- Smoker device for the preparation of food or beverages, according to claims 1 or 2, **characterized in that** the tubular body (2) also comprises a hatch (13) that gives access to the grid or filter (6) inside to be able to place it and remove it easily.

4. .- Smoker device for the preparation of food or beverages, according to any of claims 1 to 3, **characterized in that** the flame generator (11) is a propelled flame generator, optionally of noble gas, to cause the flow of smoke in the main tubular body (2) towards the interior of the hood, lid or cover (9).

5. .- Smoker device for the preparation of food or beverages, according to any of claims 1 to 4, **characterized in that** it comprises an internal fan.

6. .- Smoker device for the preparation of food or beverages, according to any of claims 1 to 5, **characterized in that** the hole (8) of the hood, lid or cover (9) is sized to insert a part of the tubular body (2) to through it, and the smoke outlets (7) are oriented towards the interior walls of the hood, lid or cover, (9).

7. .- Smoker device for the preparation of food or beverages, according to claim 6, **characterized in that** the smoke outlets (7) are located in a vertical position.

8. .- Smoker device for the preparation of food or beverages, according to claims 6 or 7, **characterized in that** the tubular body (2) is arranged vertically, being incorporated into the hood, lid or cover (9) through a hole (8) made at the top therein, presenting the front opening (3) located superiorly, at the end of a first elbowed section (2a) of the tube (2), presenting the smoke outlets (7) in a second section (2b) of the wall of the opposite side of the tube (2) that is housed inside the hood, lid or cover (9), and finally presenting the impurity collection tank (12) in the form of a receptacle that closes the lower end of the tube (2).

9. .- Smoker device for the preparation of food or beverages, according to claims 6 or 7, **characterized in that** the tubular body (2) is incorporated into the hood, lid or cover (9) in a horizontal position through a hole (8) made laterally in it; presenting the front opening (3) located laterally at the end of the external section of the tube (2).

10. .- Smoker device for the preparation of food or beverages, according to claim 9, **characterized in that** the tubular body (2) is straight.

11. .- Smoker device for the preparation of food or beverages, according to claim 9, **characterized in that** the tubular body (2) is bent.

12. .- Smoker device for the preparation of food or beverages, according to any of claims 9 to 11, **characterized in that** the tubular body (2) is divided into separable and attachable sections.

13. .- Smoker device for the preparation of food or beverages, according to any of claims 9 to 12, **characterized in that** the grid or filter (6) of the tubular body (2) is incorporated in an inclined position, near the inner end of the tube ( 2), in such a way that it defines a surface on which the combustible and aromatizing material (5) to be burned is supported, presenting the impurity collection tank (12) in the lower section of the tube that remains under the grid or filter (6 ) tilted.

14. .- Smoker device for the preparation of food or beverages, according to any of claims 9 to 12, **characterized in that** the smoke outlets (7) are arranged vertically and are defined by a plurality of perforations made in the wall that closes the rear end of the tube (2).

15. .- Smoker device for the preparation of food or beverages, according to any of claims 6 to 14, **characterized in that** the tubular body (2) incorporates a stop (14) so that it does not slide inside the hood, lid or cover ( 9) beyond schedule.

16. .- Smoker device for the preparation of food or beverages, according to any of claims 6 to 15, **characterized in that** it comprises a holding handle (15) to extract the tubular body (2) from the hole (8) of the hood, lid or cover (9) avoiding burns.

17. .- Smoker device for the preparation of food or beverages, according to claim 16, **characterized in that** the handle (15) defines a surface capable of including advertising elements.

18. .- Smoker device for the preparation of food or beverages, according to any of claims 6 to 18, **characterized in that** it comprises a sealing means to cover the hole (8) of the hood, lid or cover (9).

19. .- Smoker device for the preparation of food or beverages, according to claim 18, **characterized in that** the sealing means to cover the hole (8) of the hood, lid or cover (9) is a cork stopper or a closing gate that slides horizontally as if it were the peephole in a door or hatch; or a closure or clamp with a wire flange or similar (such as that of a kitchen can or similar).

20. .- Smoker device for the preparation of food or beverages, according to any of claims 1 to 5, **characterized in that** the tubular main body (2) comprises, covering the smoke outlets (7), an additional body (16) with one or more Connectable outlets (7a), located on their perimeter, to which one or more directional ducts (17) are attached, which allow directing the flow of smoke simultaneously into one or more hoods, lids or covers (9) independently located to the tubular body (2) and to which they are coupled at their opposite end through a hole (8) made for this purpose in them.

21. .- Smoker device for the preparation of food or beverages, according to claim 20, **characterized in that** the directional conduits (17) consist of flexible tubes of rubber or food silicone to which a nozzle, possibly interchangeable, or a biodegradable straw to absorb .

22. .- Smoker device for the preparation of food or beverages, according to any of claims 20 or 21, **characterized in that** the hole (8) of the hood, lid or cover (9) is small, according to the diameter of the directional ducts (17) or the coupling nozzle provided at the end thereof.

23. .- Smoker device for the preparation of food or beverages, according to claim 22, **characterized in that** the hole (8) has a self-closing valve.

24. .- Smoker device for the preparation of food or beverages, according to any of claims 20 to 23, **characterized in that** the tubular main body (2) has a support base (18) that allows its autonomous and independent support from the hood, lid or cover (9).

25. .- Smoker device for the preparation of food or beverages, according to any of claims 20 to 23, **characterized in that** the tubular main body (2) has clamping or coupling elements to tables, bars, pallets and other surfaces.

26. .- Smoker device for the preparation of food or beverages, according to any of claims 1 to 25, **characterized in that** the hood, lid or cover (9) is an element manufactured specifically for use with the device (1).

27. .- Smoker device for the preparation of food or beverages, according to any of claims 1 to 25, **characterized in that** the hood, lid or cover (9) is an existing element and usable for other uses such as the lid of a kitchen container, which has been adapted with the hole (8).

28. .- Smoker device for the preparation of food or beverages, according to any of claims 1 to 27, **characterized in that** the bell, lid or cover (9) is frusto-conical, frusto-pyramidal, dome-shaped with a circular base, dome-shaped elliptical base, prismatic or parallelepipedic rectangular or square base, flat circular or rectangular.

29. .- Smoker device for the preparation of food or beverages, according to any of claims 1 to 28, **characterized in that** the hood, lid or cover (9) is made of stainless steel, glass, crystal, ceramic, terracotta, polymers suitable for use in kitchen and food (polyethylene, Teflon, Bakelite, silicone ...), iron, titanium, anodized aluminum or wood.

30. .- Smoker device for the preparation of food or beverages, according to any of claims 1 to 29, **characterized in that** the fuel and flavoring material (5) is a capsule of pressed material.

31. .- Smoker device for the preparation of food or beverages, according to any of claims 1 to 30, **characterized in that** the fuel and flavoring material (5) is made of an organic component with elements crumbled into particles, such as "pellets", grains, powder or Similary.

32. .- Smoker device for the preparation of food or beverages, according to any of claims 1 to 30, **characterized in that** the fuel and flavoring material (5) is made of an organic component with elements in a liquid, resinous, vaporous, cream or frozen state.

33. .- Smoker device for the preparation of food or beverages, according to any of claims 1 to 30, **characterized in that** the fuel and flavoring material (5) is made up of salts, spices, arils, seeds, flowers, dried flowers, roots, rhizomes, woods, fruits, nuts, dry bark, vegetable bark, vegetable dried or powdered, condiments, plants, medicinal plants, resins, oils, essential oils, or by any possible combination of said elements.
